# EUROPEAN PATENT APPLICATION

(11) **EP 3 173 203 A1**
(43) Date of publication of application: **31.05.2017**
(21) Application number: 16199761.4
(22) Date of filing: 21.11.2016
(51) Int. Cl.: B29C 35/16, B29C 33/04, A43B 9/18, B29L 31/50, B29K 23/00

(54) **SYSTEM AND METHOD FOR COOLING A BLANK MADE OF A MATERIAL OF THE TYPE OF ETHYLENE VINYL ACETATE**

(30) Priority: 26.11.2015 IT UB20155914
(71) Applicant: FAE Project S.r.l., 27020 Gravellona Lomellina (PV) (IT)
(72) Inventor: BETTIN, Renzo, 27020 PARONA PV (IT)
(74) Representative: Modiano, Micaela Nadia

(57) **Abstract**

A system (1) for cooling a blank (2) made of a material of the type of EVA, acronym of ethylene vinyl acetate, comprising one or more plates (3a,3b,3c,3d,3e) shaped so as to reproduce parts of the blank (2) and adapted to contain, in a configuration for use, the blank (2); at least one of the one or more plates (3a,3b,3c,3d,3e) accommodating at least one cooling channel (4a,4e). In this configuration for use, the cooling channel (4a,4e) is adapted to receive from a hydraulic system a cooling liquid so that the passage of the liquid in the cooling channel (4a,4e) causes the cooling of the blank (2). The invention also relates to a method that is consistent with the system.

## Description

The present invention relates to a system for cooling a blank made of a material of the type of ethylene vinyl acetate, i.e., EVA, particularly for components of shoes such as soles. The invention also relates to a cooling method that is consistent with the system.

Ethylene vinyl acetate, also known by the acronym EVA, is a copolymeric plastic material of ethylene and vinyl acetate used to provide particularly flexible and elastic products. This material, used initially as a hot-setting adhesive in the wood sector, is used in various other technological fields, for example in the production of biomedical apparatuses, photovoltaic panels, coverings, paints and foams for paddings and more recently also in the field of fashion, particularly in the footwear sector, in which some of its properties such as light weight are particularly appreciated.

The manufacture of a product made of EVA requires various steps, including bringing the EVA material to high temperatures, inserting it in a mold so that it assumes the required shape, and finally cooling the product itself. The cooling step is particularly problematic: the product, which expands during molding due to the temperature, shrinks unpredictably during cooling, assuming a shape that is not always the desired one. This problem is particularly felt in the fashion sector. Differently from the other sectors, the fashion sector in fact has very stringent requirements and the manufactured product must have a specific shape, have no aesthetic defects and reproduce faithfully the requests of the fashion house. Products that do not comply with these requirements are not considered acceptable and are rejected with considerable costs in terms of time and money. For example, in the case of the production of soles made of EVA of a given size, even if they are put to cool in the same place, a considerable quantity turns out to have unacceptable and variable dimensions.

In the background art there is no system that allows to control the cooling process of EVA blanks so that the resulting product has the desired shape and dimensions.

The aim of the present invention is to overcome the limitations of the background art noted above, by proposing a new system capable of allowing the production of blanks made of EVA material that is efficient and gives appreciable results.

Within this aim, an object of the invention is to reduce production waste, increasing productivity, recover the cost of the raw material and the time to provide an EVA blank.

A further object of the present invention is to improve the quality of the EVA blank.

Another object of the present invention is to increase the number of products manufactured daily and to lower the cost.

Another object of the present invention is to have a structure that is simple, relatively easy to provide in practice, safe in use and effective in operation, as well as relatively modest in cost.

This aim and these and other objects that will become better apparent hereinafter are achieved by a system according to claim 1 and by a method according to claim 10.

Advantageously, the system allows to control the step for cooling an EVA blank.

Conveniently, the system allows to cool blanks that have different shapes.

Preferably, the system allows to obtain blanks that are tougher and more durable.

Advantageously, the invention allows to obtain precise control of the shape and consistency of the blank.

Further characteristics and advantages of the invention will become better apparent from the detailed description that follows, given by way of nonlimiting example, accompanied by the corresponding figures, wherein:
Figure 1 is a perspective view of the system according to the present invention;
Figure 2 is a top view of the system of Figure 1;
Figure 3 is a flowchart showing the operation of the method according to the present invention.

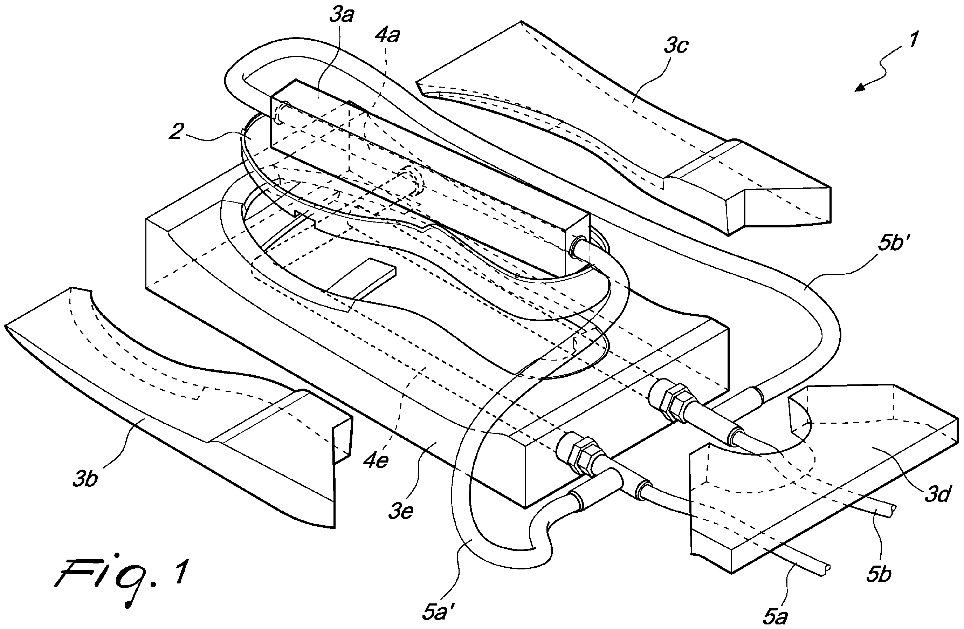

An exemplifying architecture of the system according to the present invention is shown in Figure 1, which shows a cooling system, designated generally by the reference numeral 1, used to cool a blank 2 made of a material of the type of ethylene vinyl acetate, i.e., EVA. The term "blank" is understood to reference any manufactured article that can be subjected to subsequent processing steps. For example, Figure 1 shows a shoe sole, provided by means of various systems with adapted machines that allow the high-temperature processing of EVA, which once cooled by the system 1 can be further processed and be applied to an upper to provide a shoe. Hereinafter, although for the sake of simplicity it will be assumed that the blank is a sole, it should be understood that the blank can be any element obtained by molding manufactured on a production line.

The cooling system 1 of Figure 1 comprises one or more plates 2a, 2b, 2c, 2d, 2e shaped so as to reproduce parts of the blank of the EVA type. Preferably, the plates are metallic and are made of a metal with high heat conductivity and their number depends on the type of blank to be processed. For example, if the blank is a sole, the number of the plates can be five, designated by the reference numerals 3a-3e, so as to be able to delimit or enclose the blank 2 to be cooled. In this case, the lower plate 3e is shaped so as to accommodate the lower part of the sole; the upper plate 3a is shaped so that it is arranged on the upper part of the sole 2; the plate 3d is shaped so as to delimit the heel, while the other two lateral plates 3b, 3c enclose the lateral and front part of the sole 2.

Of course, the plates are designed as a function of the type of blank and can be adapted so as to have, at the portions of the blank in which there is a higher percentage of polymeric material, areas in which the cooling process is rendered more intense.

At least one of these plates 3a-3e accommodates a cooling channel that can be connected to a hydraulic system. Preferably, the cooling channels are accommodated within the plate, designated by the reference numeral 3e, on which the blank is arranged and on the plate, designated by the reference numeral 3 a, in the plate arranged above the blank 2. The plate 3a, due to gravity, keeps the blank coupled to the lower plate 3e.

The cooling channels 4a, 4e can have various shapes. Figure 1 shows a channel 4a that has a cylindrical shape and is extended along the entire longitudinal extension of the plate 3a, and a channel, designated in the figure by the reference numeral 4e, which is U-shaped and is accommodated within the plate 4e. In any case, the cooling channel passes through the plate and has two ends that act as ports, so as to allow the cooling liquid to flow in and flow out from the plate in which they are inserted. In particular, each cooling channel 4a, 4e can be connected by means of these ports to an external hydraulic system. The cooling channel can be provided by using various materials, for example metals. The cooling liquid is preferably water or an aqueous solution which preferably comprises antifreeze. Preferably, the temperature of said cooling liquid is substantially 14°C or less.

In the preferred embodiment, the connection to the external hydraulic system is provided by means of a tube 5a for supplying cooling liquid and a tube 5b for the outflow of the cooling liquid, which are respectively connected, by means of a connector such as for example a valve, to a port of the cooling channel, for example by interposition of other tube sections 5a', 5b'. For example, the liquid might flow in from the tubes 5a and 5a', pass through both the channel 4a and the channel 4e, and then flow out through the tubes 5b and 5b'. The connection is provided in such a manner that the cooling liquid circulates, within the plates, so as to cause by convection the cooling of the blank 2. In this manner, by means of a thermal convection process, the heat is transferred from the blank to the plates that are cooled by the cooling liquid.

The hydraulic system preferably has a closed circulation and is preset to make the cooling liquid flow through the plates. The system comprises an expansion vessel and an accumulation tank. The accumulation tank is connected by means of a hydraulic pump and preferably by means of a valve to the supply tube 5a in order to introduce the cooling liquid in at least one of the plates. The tank is of course furthermore connected to the return tube 5b, which is adapted to receive the liquid introduced in the plates by means of the supply tube 5a.

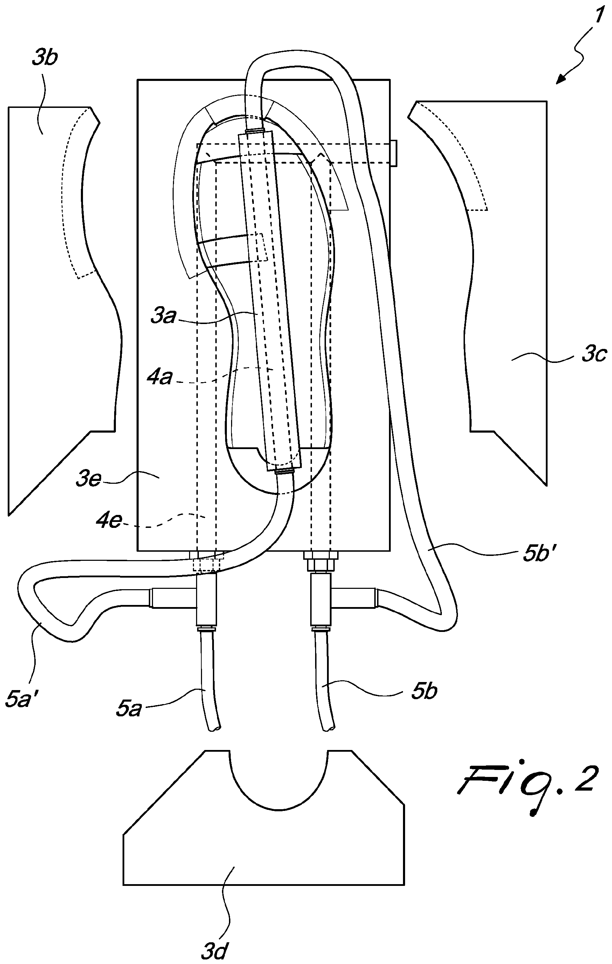

Figure 2 is a top view of the system of Figure 1.

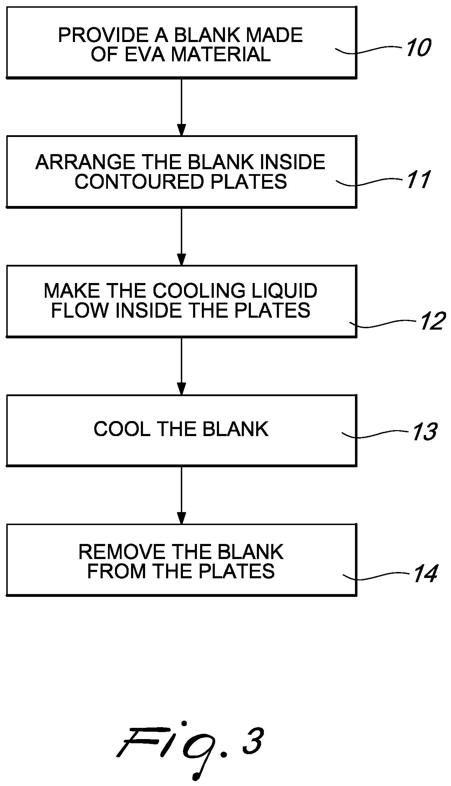

Operation of the method according to the invention is now described with reference to the flowchart of Figure 3.

In step 10, a sole 2 made of EVA material is picked up by a machine. The temperature of this sole is relatively high.

In step 11, the sole is arranged inside the plates 3a-3e. For example, the sole 2 is inserted in the plate 3e, which has a seat adapted to accommodate it, after which the plate 3a is rested on the upper part of the sole and then the other plates 3b, 3c, 3d are in turn arranged so as to completely surround said sole. The cooling channels 4a, 4e can be already connected to the hydraulic system.

In step 12, the cooling liquid, which arrives from the hydraulic system, is made to flow through the cooling channels 4a, 4e, for example following the opening of a valve. In this manner, the sole is cooled by means of the passage of the cooling liquid in the channels 4a, 4e.

In step 13, cooling is completed.

In step 14, the sole is removed from the plates, which can thus accommodate a new sole to be cooled.

It has thus been shown that the method and the system described achieve the intended aim and objects. In particular it has been shown that the system thus conceived allows to overcome the qualitative limitations of the background art by means of a system that performs spot cooling of the blanks, solving the problems due to the tendency of the EVA material to expand and shrink in an uncontrolled manner as a function of the temperature. The system allows to control the cooling process so that the blank 2 shrinks as desired. Thanks to the plates and the channels, the cooling process is quick and the result is predictable. By virtue of hydraulic pumping it is possible to set latent heat switching values that alter the composition of the product, reduce the shrinkage times and improve the toughness and the drying times of the product. This is particularly advantageous for blanks obtained by injection for the footwear sector, which set different requirements in terms of volume due to the uneven cross-section that composes their models from which the products are generated.

Clearly, numerous modifications are evident and can be performed promptly by the person skilled in the art without abandoning the protective scope of the appended claims.

Therefore, the scope of the protection of the claims must not be limited by the illustrations or preferred embodiments shown in the description by way of example, but rather the claims must comprise all the characteristics of patentable novelty that reside in the present invention, including all the characteristics that would be treated as equivalents by the person skilled in the art.

The disclosures in Italian Patent Application No. 102015000077105 (UB2015A005914) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system (1) for cooling a blank made of a material of the type of ethylene vinyl acetate, or EVA, **characterized in that** it comprises one or more plates (3a, 3b, 3c, 3d, 3e) shaped so as to reproduce parts of a blank (2) of the EVA type; at least one of said one or more plates (3a, 3b, 3c, 3d, 3e) accommodating at least one cooling channel (4a, 4e); said one or more plates (3a, 3b, 3c, 3d, 3e) being adapted to contain, in a configuration for use, said blank (2); in said configuration for use said at least one cooling channel (4a, 4e) being adapted to receive from a hydraulic system a cooling liquid so that the passage of said liquid in said at least one cooling channel (4a, 4e) causes the cooling of said blank (2).

2. The system according to claim 1, **characterized in that** it comprises five complementary plates (3a, 3b, 3c, 3d, 3e) which are contoured so as to enclose said blank (2) in the configuration for use.

3. The system according to one or more of the preceding claims, **characterized in that** said cooling liquid is water or an aqueous solution, said cooling liquid preferably having a temperature lower than or equal to 14°C.

4. The system according to one or more of the preceding claims, **characterized in that** said one or more plates (3a, 3b, 3c, 3d, 3e) is metallic, preferably aluminum.

5. The system according to one or more of the preceding claims, **characterized in that** it comprises a lower plate (3e) on which said blank (2) is arranged, an upper plate (3a) adapted to be arranged on said blank (2) so as to couple it to said lower plate (3e).

6. The system according to one or more of the preceding claims, **characterized in that** said blank (2) is a sole of a shoe; the system further comprising a plate (3d) that has the shape of the heel of said sole and two other plates (3b, 3c) adapted to be arranged along the lateral and front extension of said sole; said lower plate (3e) having a seat for accommodating the lower part of said sole; the upper plate (3a) being shaped to be rested on the upper part of said sole.

7. The system according to one or more of the preceding claims, **characterized in that** it has a channel (4a), termed upper channel, which passes along the longitudinal extension of said upper plate (3a), and a channel (4e), termed lower channel, which is substantially U-shaped and passes through said lower plate (3e).

8. The system according to one or more of the preceding claims, **characterized in that** one end of said lower channel (4e) and one end of said upper channel (4a) are connected to a supply tube (5a, 5a') for feeding said cooling liquid; another end of said lower channel (4e) and another end of said upper channel (4a) being connected to a return tube (5b, 5b') that is adapted to make said cooling liquid flow out of said cooling channels (4a, 4e).

9. The system according to one or more of the preceding claims, **characterized in that** it comprises a hydraulic system that comprises an expansion vessel and an accumulation tank; the accumulation tank being connected by means of a hydraulic pump and a one-way valve to a supply tube (5a) for introducing said cooling liquid in said cooling channels (4a, 4e); the tank being further connected to a return tube (5b) that is adapted to receive said cooling liquid from said cooling channels.

10. A method for cooling a blank made of a material of the type of ethylene vinyl acetate, i.e., EVA, particularly for components of shoes such as soles, **characterized in that** it comprises the steps of:
- providing (10) a blank (2) made of EVA material;
- arranging (11) one or more plates (3a, 3b, 3c, 3d, 3e) so as to contain said blank (2); said one or more plates (3a, 3b, 3c, 3d, 3e) being shaped so as to reproduce parts of said blank (2); at least one of said one or more plates (3a, 3b, 3c, 3d, 3e) being provided with at least one cooling channel (4a, 4e);
- making (12) a cooling liquid flow by means of a hydraulic system connected to said at least one cooling channel (4a, 4e);
- cooling (13) said blank (2) by means of the passage of said cooling liquid in said at least one cooling channel (4a, 4e);
- removing (14) said blank (2) from said one or more plates (3a, 3b, 3c, 3d, 3e).
